# FASCICULE DE BREVET EUROPEEN

(11) **EP 1 695 907 B1**
(45) Date de publication et mention de la délivrance du brevet: **09.04.2008**
(21) Numéro de dépôt: 06003537.5
(22) Date de dépôt: 22.02.2006
(51) Int. Cl.: B64C 27/32, B64C 27/50, F16D 63/00, H02K 7/106

(54) **Dispositif de verrouillage d'une structure de fixation d'une pale au moyeu d'un rotor de giravion**
Vorrichtung zur Verriegelung der Befestigungstruktur eines Blattes an der Nabe eines Drehflüglerrotors
Device for locking the mounting structure of a blade to the hub of a rotorcraft rotor

(30) Priorité: 28.02.2005 FR 0501982
(43) Date de publication de la demande: 30.08.2006
(73) Titulaire: EUROCOPTER, 13725 Marignane Cédex (FR); Artus, 49241 Avrille (FR)
(72) Inventeur: Louis, Charles, 13090 Aix en Provence (FR); Quesne, Patrick, 49000 Ecouflant (FR)
(74) Mandataire: Renaud-Goud, Thierry

(56) Documents cités:
- WO-A-98/21807
- DE-A1- 10 125 836
- DE-A1- 10 306 875
- US-A- 5 782 606
- US-A- 5 951 251

## Description

La présente invention est relative à un dispositif de verrouillage d'une structure de fixation d'une pale au moyeu d'un rotor de giravion.

Le domaine technique de l'invention est celui de la conception et de la fabrication des giravions.

L'invention s'applique en particulier aux rotors de giravions équipés de pales repliables ainsi que d'actionneurs de déploiement et de repliage automatique de ces pales.

Il a été décrit dans les brevets US 5782606 et FR 2742726 un dispositif de repliage d'une pale dont le pied de pale est solidaire d'une ferrure de repliage équipée de deux paliers de rotation par l'intermédiaire desquels la pale peut pivoter par rapport à l'extrémité d'un manchon assurant la liaison mécanique entre la pale et le moyeu du rotor. Le rotor illustré dans ces brevets comporte un plateau percé d'autant d'alvéoles qu'il reçoit de pales. Chaque manchon de fixation d'une pale au moyeu comporte deux bras formant une chape et est solidaire du moyeu par l'intermédiaire d'une butée sphérique lamifiée, solidaire des bras du manchon, cette butée élastique permettant l'articulation du manchon - et de la pale concernée - par rapport au moyeu du rotor selon trois axes ou directions de rotation :
i) l'articulation selon un premier axe sensiblement parallèle à l'axe longitudinal de l'arbre du rotor, pour permettre un débattement « en traînée » de la pale par rapport au moyeu ;
ii) l'articulation du manchon et de la pale selon un deuxième axe sensiblement confondu avec l'axe longitudinal de la pale, pour permettre les variations de pas (et d'incidence) requises pour la pale ; et
iii) l'articulation selon un troisième axe sensiblement perpendiculaire à l'axe longitudinal de l'arbre du rotor, pour permettre un mouvement de battement de la pale par rapport au moyeu du rotor.

Notamment, lorsque l'articulation de la pale (et du manchon) par rapport au moyeu est réalisée par l'intermédiaire d'une butée sphérique, ces trois axes d'articulation concourent au centre géométrique de cette butée.

La présence nécessaire de ces trois degrés de liberté en rotation de la pale par rapport au moyeu, lors de la rotation du rotor en vol notamment, constitue une gêne, lorsque le rotor est à l'arrêt, pour replier les pales du rotor.

Il est en effet nécessaire, avant de replier les pales, de bloquer ces trois degrés de liberté de façon à inhiber leurs effets. Le blocage de l'articulation en battement est généralement réalisé par la mise en appui, sous l'effet du poids propre de la pale et de son manchon associé, d'une partie du manchon - ou d'une butée « basse » solidaire de celui-ci - contre une butée complémentaire intégrée au moyeu ou solidaire de celui-ci appelée généralement anneau de butée réciproque par l'Homme du métier.

Il reste nécessaire de verrouiller en position le manchon par rapport au moyeu, selon les axes d'articulation en traînée et en pas. Par raison de commodité, il convient de noter que l'on peut employer dans ce texte indifféremment les termes « verrouiller » ou « bloquer » d'une part et, « déverrouiller » ou « débloquer » d'autre part.

A cet effet, il peut être prévu un dispositif de verrouillage d'une structure (telle qu'un manchon) de fixation articulée d'une pale d'un rotor de giravion à un moyeu de ce rotor, qui comporte un levier agencé pour provoquer le pivotement de cette structure selon l'axe de traînée jusqu'à une position de verrouillage en traînée dans laquelle cette structure est en appui sur une butée « de traînée » solidaire du moyeu. Ce levier peut provoquer simultanément le pivotement de la structure (manchon) de fixation de pale selon l'axe du pas jusqu'à une position de verrouillage en pas dans laquelle cette structure est en appui sur une butée « de pas » reliée au moyeu.

Ce levier peut être mis en oeuvre, c'est-à-dire entraîné en mouvement, par un actionneur électrique tel qu'un moteur rotatif, pour provoquer le verrouillage automatique, sous le contrôle d'une unité de contrôle et de commande de verrouillage du manchon, de la position de la structure de fixation de pale par rapport au moyeu, préalablement au repliage des pales du rotor.

Un tel dispositif de verrouillage est notamment décrit dans le brevet US-5951251.

Dans ces conditions, il est impératif que le système de verrouillage (dit encore « blocage ») des manchons de fixation de pales ne soit pas activé accidentellement, lorsque le rotor tourne, pendant un vol notamment.

C'est à ce besoin que répond l'invention.

Ainsi, selon l'invention, il est proposé un dispositif de verrouillage d'une structure de fixation d'une pale d'un rotor de giravion à pales repliables, qui comporte un moyeu, plusieurs pales, une structure de fixation d'une pale au moyeu respectivement associée à chacune des pales, cette structure de fixation étant articulée en pas et en traînée par rapport au moyeu, le rotor comportant également un moyen de verrouillage respectivement associé à chacune des structures de fixation de pale et agencé pour pouvoir provoquer le verrouillage de l'articulation en pas de la structure de fixation de pale par rapport au moyeu, et agencé en outre pour pouvoir provoquer le verrouillage de l'articulation en traînée de la structure de fixation de pale par rapport au moyeu, le moyen de verrouillage étant susceptible d'être entraîné en mouvement par un actionneur électrique rotatif et un mécanisme d'entraînement. Ce moyen de verrouillage est remarquable en ce qu'il comporte en outre un moyen de freinage de l'actionneur électrique rotatif et/ou du mécanisme d'entraînement qui empêche la rotation de cet actionneur et du mécanisme d'entraînement sous l'effet notamment des vibrations du rotor, en l'absence de courant d'alimentation, et qui permet la rotation de l'actionneur et du mécanisme d'entraînement lorsque l'actionneur est alimenté ; en outre, le mécanisme d'entraînement présente une chaîne cinématique irréversible.

En particulier, ce mécanisme peut comporter un réducteur de vitesse comportant une vis sans fin pour l'entraînement d'une roue.

Selon des modes préférés de réalisation de l'invention :
- le moyen de freinage agit par effet magnétique ;
- le moyen de freinage comporte un premier aimant solidaire d'une pièce fixe de l'actionneur ou du mécanisme d'entraînement ainsi qu'un deuxième aimant solidaire d'une pièce mobile de l'actionneur ou du mécanisme d'entraînement, la position du premier aimant sur la pièce fixe et la position du deuxième aimant sur la pièce mobile étant telles que le premier aimant et le deuxième aimant sont susceptibles d'être disposés en regard l'un de l'autre lors de la rotation de l'actionneur, et les polarités de ces aimants étant telles qu'ils s'attirent mutuellement lorsqu'ils sont disposés en regard l'un de l'autre de façon à provoquer un couple de freinage lorsqu'ils sont écartés de cette position de regard mutuel ;
- le moyen de freinage comporte au moins deux premiers aimants solidaires d'une pièce fixe telle qu'une bride de fixation de l'actionneur, et comporte au moins deux deuxièmes aimants solidaires d'une pièce mobile telle qu'un engrenage d'entraînement d'un levier de verrouillage d'un manchon articulé par l'actionneur rotatif, la pièce mobile s'étendant - en partie au moins - en regard de la pièce fixe, l'écartement des premiers aimants correspondant à l'écartement des deuxièmes aimants de sorte que les couples de freinage respectivement provoqués par chacun des au moins deux couples d'aimants s'additionnent;
- le mécanisme d'entraînement du moyen de verrouillage par l'actionneur comporte un réducteur de vitesse à vis sans fin.

L'irréversibilité du mécanisme d'entraînement du moyen de verrouillage par l'actionneur permet d'éviter que les efforts s'exerçant sur les organes de verrouillage de pale ne soient transmis à l'actionneur.

D'autres caractéristiques et avantages de l'invention apparaissent dans la description suivante qui illustre sans aucun caractère limitatif, des modes préférés de réalisation de l'invention et qui se réfère aux dessins annexés sur lesquels :
- la figure 1 est une vue schématique - en vue de dessus-d'un rotor de giravion selon l'invention, qui comporte quatre pales repliées et quatre actionneurs de verrouillage en position des manchons servant à fixer les pales au moyeu du rotor ;
- la figure 2 est une vue en perspective schématique « écorchée » d'un levier de verrouillage de manchon d'un dispositif selon l'invention, et du moteur électrique ainsi que du mécanisme d'entraînement servant à actionner le levier de verrouillage ; quatre actionneurs identiques tels que celui-ci illustré figure 2 sont fixés sur le moyeu du rotor de la figure 1 ;
- la figure 3a est une vue schématique de deux portions de deux manchons et du levier selon l'invention en position déverrouillée (déblocage des manchons pour conformer le rotor en situation de vol) ;
- la figure 3b est une vue schématique des deux portions de manchons selon la figure 3a en position verrouillée (blocage des manchons pour assurer le repliage des pales) ;
- la figure 4a est une vue en perspective « écorchée », correspondant à une vue IVa de la figure 4b, du moteur électrique assurant la rotation du levier de verrouillage/déverrouillage et illustrant l'implantation d'aimants de freinage sur une bride du moteur électrique;
- la figure 4b est une vue en perspective « écorchée », correspondant à une vue IVb de la figure 4a, du moteur électrique assurant la rotation du levier de verrouillage/déverrouillage et illustrant l'implantation d'aimants de freinage sur un engrenage entraîné par le moteur électrique et s'étendant face à la bride de ce moteur.

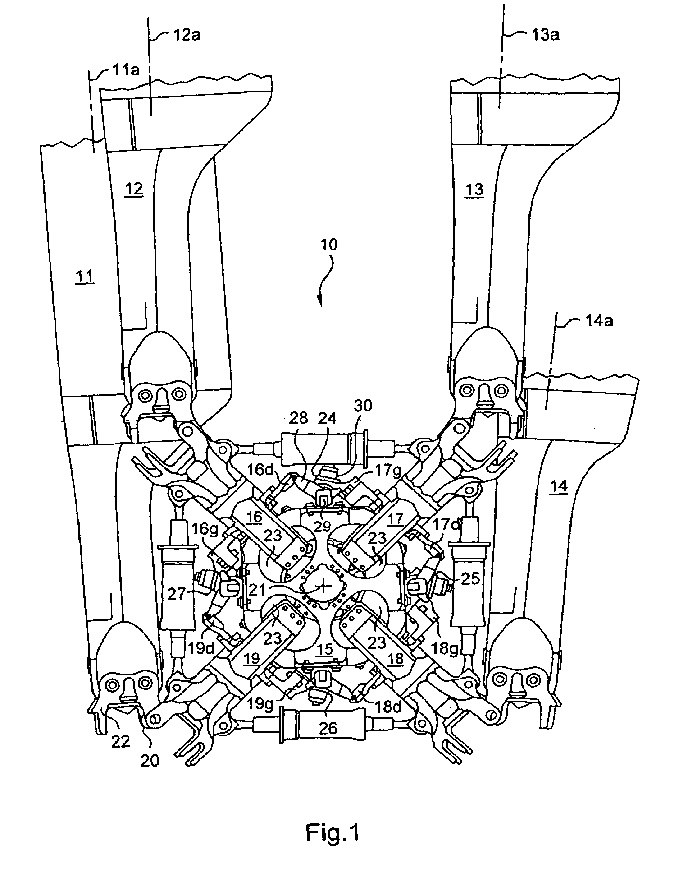

Par référence à la figure 1, le rotor 10 comporte quatre pales - 11 à 14 - respectivement fixées au moyeu 15 du rotor par quatre manchons 16 à 19.

Chaque pale (telle que celle repérée 11) est articulée au cours du repliage par un palier (repère 20) à l'extrémité externe du manchon correspondant (repère 19) par l'intermédiaire d'une ferrure 22 de repliage. Dans la position de repliage illustrée sur la figure 1, les axes longitudinaux 11a à 14a respectifs des pales 11 à 14 sont sensiblement parallèles et perpendiculaires à l'axe 21 de rotation du rotor 10.

Chacun des manchons est articulé par rapport au plateau de moyeu 15, par son extrémité interne, par l'intermédiaire d'une butée sphérique (non vue sur cette figure) s'étendant au travers d'une des quatre alvéoles 23 découpées dans le plateau 15.

Chaque manchon comporte une saillie gauche (16g à 19g respectivement) présentant une portion en forme de lame, ainsi qu'une saillie droite (16d - 19d respectivement) présentant également une portion en forme de lame.

Un actionneur 24 à 27 de verrouillage de manchon est fixé sur le plateau de moyeu 15, à la périphérie de celui-ci, entre chaque couple de deux manchons adjacents.

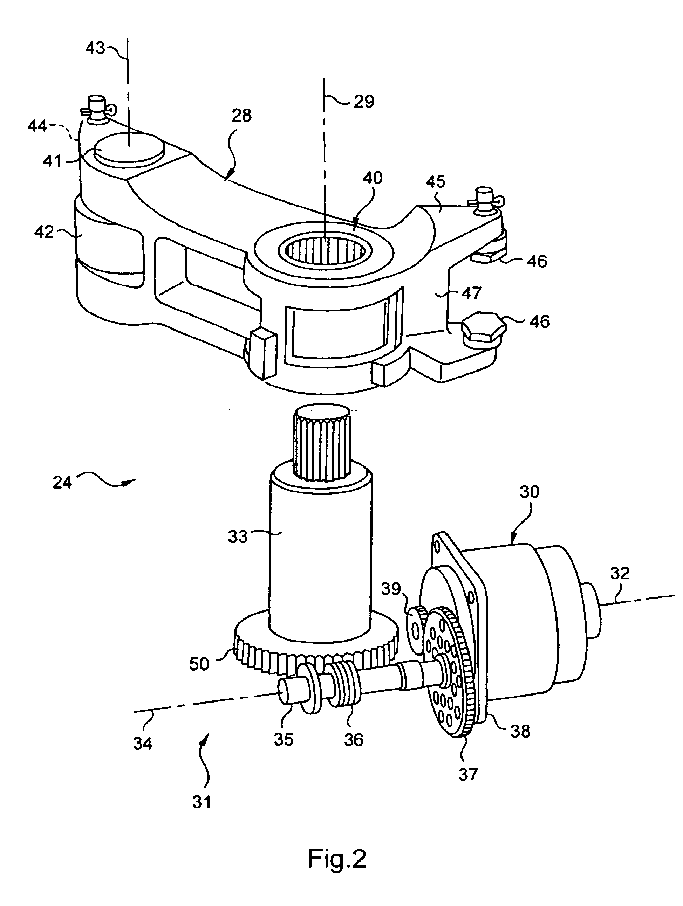

Chacun de ces quatre actionneurs identiques de verrouillage, tel que l'actionneur 24 figure 2, comporte un levier 28 monté pivotant par rapport au plateau 15 selon un axe 29 de pivotement sensiblement parallèle à l'axe 21 du rotor. Le pivotement du levier 28 de verrouillage est provoqué par un moteur électrique 30 rotatif selon un axe 32 qui entraîne le levier 28 par l'intermédiaire d'un mécanisme 31 démultiplicateur.

Le levier 28 présente une forme coudée dans la partie centrale, et deux extrémités opposées 41 et 45. Ce levier 28 présente dans sa partie centrale un alésage 40 cannelé d'axe 29 recevant l'extrémité d'un arbre 33 d'entraînement du mécanisme 31.

L'extrémité 45 du levier 28 présente une dépression 47 lui conférant une forme de fourche, et deux butées 46 se faisant face. Cette dépression et ces butées coopèrent avec la saillie gauche 17g du manchon 17 correspondant pour provoquer le verrouillage - et inversement le déverrouillage - de ce manchon. A cet effet, la dépression 47 s'engage - ou se désengage - autour de la portion en forme de lame de la saillie 17g, et les butées 46 viennent en appui sur cette saillie pour provoquer et/ou autoriser le pivotement du manchon selon ses axes d'articulation en pas et en traînée. Cette action du levier 28 de l'actionneur 24 sur le manchon 17 est simultanée à une action du même levier 28 de l'actionneur 24 sur le manchon 16, par l'intermédiaire de la saillie droite 16d de celui-ci, et par coopération de cette saillie 16d avec un galet 42 et deux butées (non vues figure 2) 44 similaires à celles décrites ci avant concernant la saillie 17g du manchon 17, et complémentaires à celles-ci. Ainsi le verrouillage (et inversement le déverrouillage) d'un manchon - tel que le manchon 17 - est obtenu par l'action simultanée des deux leviers entraînés respectivement par les deux actionneurs - tels que 24 et 25 - disposés de part et d'autre du manchon 17.

Bien entendu, le verrouillage des degrés de liberté en pas et en traînée nécessite, au préalable, de positionner chaque manchon à un angle de pas prédéterminé, par exemple à une valeur nulle, de façon à permettre la coordination des mouvements des deux butées 44 et du galet 42 avec la saillie droite 16d d'une part et des deux butées 46 avec la saillie gauche 17g d'autre part.

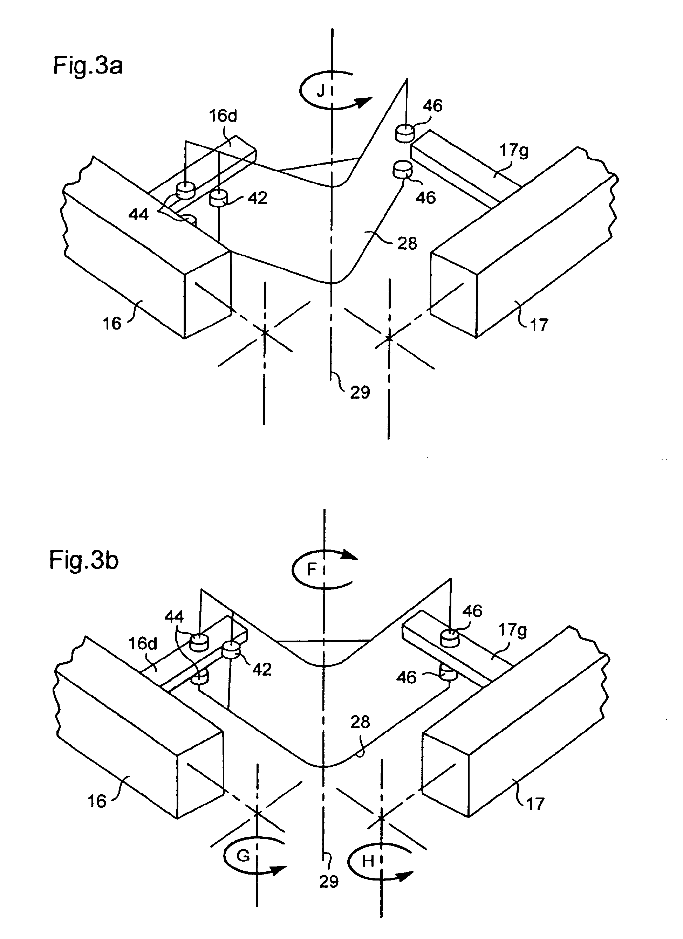

Pour bien comprendre l'invention, les figures 3a et 3b, où les saillies 16g et 17d ne sont pas montrées par raison de simplification, schématisent respectivement le levier 28 en position déverrouillée (rotor en situation de vol après rotation selon la flèche J du levier 28) et en position verrouillée (pour repliage) après rotation, dans ce cas dans le sens F autour de l'axe 29, le galet 42 entraînant en traînée par exemple le manchon 16 suivant la flèche G par action sur la saillie droite 16d jusqu'à une mise en butée sur une butée de traînée solidaire du moyeu 15, ce qui assure le blocage (verrouillage) de tous les manchons en traînée et par suite celui de toutes les pales du rotor, par raison de symétrie (rotation du manchon 17 selon la flèche H et de même pour les manchons 18 et 19).

Dans ces conditions, les saillies gauches 16g à 19g se trouvent simultanément chacune immobilisée comme les saillies droites 16d à 19d, respectivement entre les deux séries de butées 44 et 46 correspondantes, ce qui assure alors le blocage (verrouillage) en pas de tous les manchons et par suite celui de toutes les pales du rotor quand l'opération de repliage est achevée.

Comme indiqué précédemment, la rotation selon l'axe 29 du levier 28 de l'actionneur 24 qui est nécessaire au verrouillage - et au déverrouillage - des manchons articulés supportant les pales du rotor, est obtenue par une rotation - dans un sens prédéterminé F pour le verrouillage et dans le sens inverse J pour le déverrouillage - du moteur 30 et du mécanisme 31 d'entraînement du levier 28.

A cet effet et en référence à la figure 2, un pignon 39 de sortie du moteur 30 entraîne en rotation une roue dentée 37, par engrènement. La roue 37 est solidaire d'un arbre 35 d'axe 34, qui porte une vis 36 sans fin qui engrène avec une autre roue dentée 50 solidaire de l'arbre 33 d'entraînement du levier 28 en rotation selon l'axe 29. On note que cette cinématique produit une réduction de la vitesse de rotation du moteur 30.

En l'absence de courant électrique alimentant le moteur 30, les vibrations du rotor 10 transmises au rotor du moteur 30 peuvent entraîner une rotation « parasite » (indésirable) du pignon 39 de sortie du moteur 30. Cette rotation indésirable de quelques tours du moteur serait susceptible d'entraîner une rotation - de quelques degrés - du levier 28, par l'intermédiaire du mécanisme 31 d'entraînement (incluant la transmission 36, 50 irréversible).

Afin d'empêcher cette rotation parasite, deux aimants 51, 52 sont fixés sur la bride 38 de fixation du moteur 30 sur le carter (non représenté) de l'actionneur 24, tandis que deux aimants 53, 54 sont fixés sur la face de la roue dentée 37 qui est en regard de la bride.

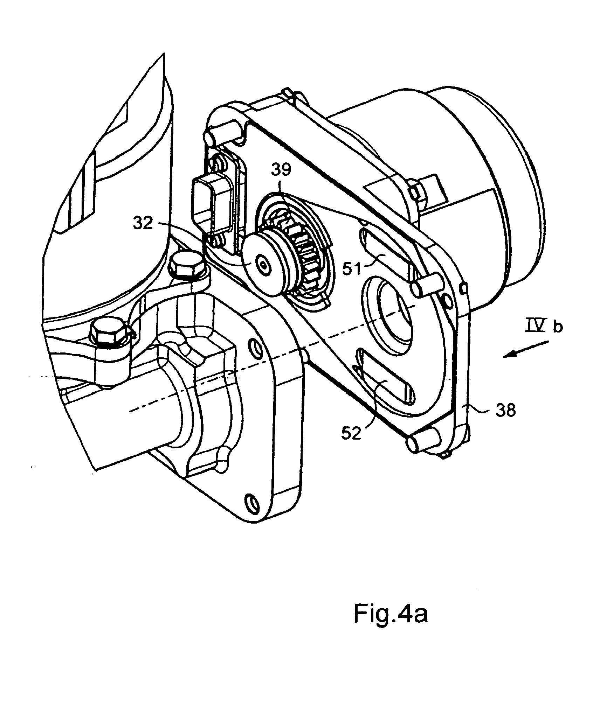

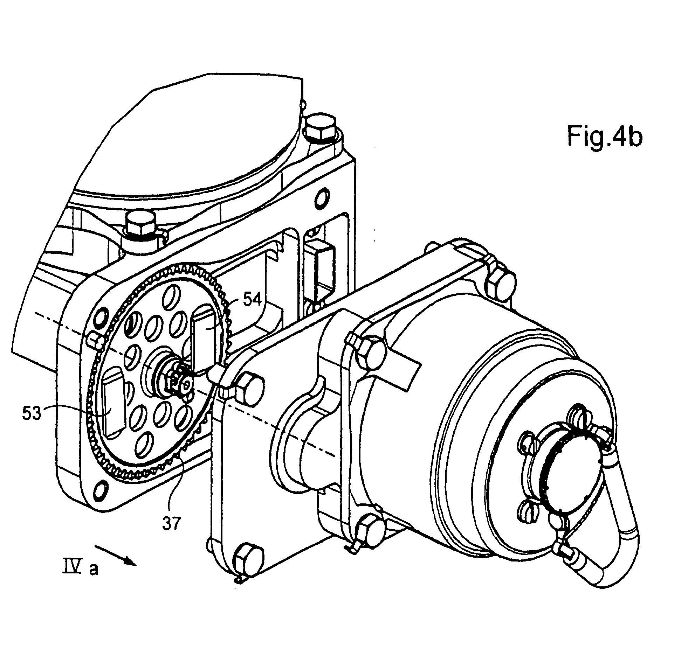

Dans la configuration illustrée par les figures 4a et 4b, les aimants 53 et 54 sont disposés de façon diamétralement opposés, par référence à l'axe 34 de rotation de la roue 37 et les aimants 51 et 52 sont également diamétralement opposés par rapport à cet axe. Ces quatre aimants sont tous disposés à la même distance de cet axe.

Dans cette configuration, l'aimant tournant 53 n'est en regard d'aucun des aimants fixes 51, 52. Il en est de même concernant l'aimant tournant 54. Par conséquent, aucune force d'attraction n'étant exercée par les aimants, aucun couple n'empêche la rotation parasite des pignons 37 et 39.

Si une rotation d'un quart de tour est appliquée à la roue 37 dans le sens horaire, on comprend, à partir des figures 4a et 4b, que l'aimant 53 viendra alors en regard de l'aimant fixe 52 et que l'aimant 54 viendra en regard de l'aimant 51. Les pôles de ces aimants étant disposés pour que les aimants fixes puissent attirer les aimants mobiles, on comprend que les aimants 52 et 53 s'attirent si une vibration tend à éloigner ces aimants par rotation incontrôlée de la roue 37. L'attraction mutuelle des aimants 52 et 53 provoquera un couple de rappel de la roue 37 jusqu'à la position de regard mutuel de ces deux aimants et l'intensité de ce couple de rappel est doublée du fait de la présence, dans la même position de la roue 37, d'une attraction entre les deux autres aimants 51 et 54.

Bien entendu, les aimants sont dimensionnés de façon à ce que le couple total de « blocage » ou rappel magnétique qu'ils exercent lorsqu'ils sont en regard mutuel deux à deux, soit bien inférieur au couple moteur du moteur 30 lorsque celui-ci est alimenté.

L'invention fait notamment suite à des essais qui ont montré que, lorsque l'on soumet à des vibrations un dispositif de verrouillage de pales dont le mécanisme d'entraînement présente une cinématique irréversible, les vibrations peuvent provoquer, dans certaines conditions, une rotation du levier de verrouillage des pales en l'absence de courant d'alimentation de l'actionneur d'entraînement du levier ; même si cette rotation « parasite » du levier est de faible amplitude, il est avantageux d'équiper le dispositif conformément à l'invention, pour prévenir cette rotation incontrôlée du levier de verrouillage.

L'invention permet ainsi de proposer un système de freinage du mécanisme de verrouillage et déverrouillage des manchons qui est efficace, léger, de faible encombrement, et facile à mettre en oeuvre.

II va sans dire que divers ajouts, omissions, ou modifications pourront être apportés par l'homme du métier aux différents modes de réalisation décrits ci avant, tant dans leurs éléments structurels que dans leurs composantes fonctionnelles, sans sortir du cadre de la présente invention.

## Revendications

1. Dispositif de verrouillage d'une structure (16 à 19) de fixation d'une pale repliable (11 à 14) d'un rotor (10) de giravion à pales (11 à 14) repliables au moyeu (15) dudit rotor, cette structure de fixation étant articulée en pas et en traînée par rapport au moyeu (15), le dispositif comportant un moyen de verrouillage pour être associé respectivement à chacune des structures de fixation de pale et pour être agencé pour pouvoir provoquer le verrouillage de l'articulation en pas de la structure de fixation (16 à 19) de pale par rapport au moyeu (15), et pour être agencé en outre pour pouvoir provoquer le verrouillage de l'articulation en traînée de la structure de fixation de pale par rapport au moyeu (15), le moyen de verrouillage étant susceptible d'être entraîné en mouvement par un actionneur électrique rotatif (30) et un mécanisme d'entraînement,
**caractérisé en ce qu**'il comporte en outre un moyen de freinage de l'actionneur électrique rotatif ou du mécanisme d'entraînement qui empêche la rotation de cet actionneur et du mécanisme d'entraînement sous l'effet notamment des vibrations du rotor, en l'absence de courant d'alimentation, et qui permet la rotation de l'actionneur (30) et du mécanisme d'entraînement lorsque l'actionneur (30) est alimenté,
et en ce que le mécanisme d'entraînement présente une cinématique irréversible.

2. Dispositif selon la revendication 1 ,
dans lequel le moyen de freinage agit par effet magnétique.

3. Dispositif selon la revendication 2,
dans lequel le moyen de freinage comporte un premier aimant (51) solidaire d'une pièce fixe de l'actionneur ou du mécanisme d'entraînement ainsi qu'un deuxième aimant (53) solidaire d'une pièce mobile de l'actionneur ou du mécanisme d'entraînement, la position du premier aimant sur la pièce fixe et la position du deuxième aimant sur la pièce mobile étant telles que le premier aimant et le deuxième aimant sont susceptibles d'être disposés en regard l'un de l'autre lors de la rotation de l'actionneur, et les polarités de ces aimants étant telles qu'ils s'attirent mutuellement lorsqu'ils sont disposés en regard l'un de l'autre de façon à provoquer un couple de freinage lorsqu'ils sont écartés de cette position de regard mutuel.

4. Dispositif selon la revendication 3,
dans lequel le moyen de freinage comporte au moins deux premiers aimants (51, 52) solidaires d'une pièce fixe telle qu'une bride de fixation (38) de l'actionneur, et comporte au moins deux deuxièmes aimants (53, 54) solidaires d'une pièce mobile telle qu'un engrenage d'entraînement (37) d'un levier de verrouillage (28) d'un manchon articulé par l'actionneur rotatif (30), la pièce mobile s'étendant - en partie au moins - en regard de la pièce fixe, l'écartement des premiers aimants correspondant à l'écartement des deuxièmes aimants de sorte que les couples de freinage respectivement provoqués par chacun des au moins deux couples d'aimants s'additionnent.

5. Dispositif selon l'une quelconque des revendications 1 à 4,
dans lequel le mécanisme d'entraînement du moyen de verrouillage par l'actionneur comporte un réducteur de vitesse.

6. Dispositif selon la revendication 5,
dans lequel le réducteur de vitesse est un réducteur à roue et à vis sans fin (50, 36).

7. Dispositif selon l'une quelconque des revendications 1 à 6,
dans lequel le moyen de verrouillage comporte un levier de verrouillage (28) agencé pour provoquer le pivotement de cette structure selon l'axe de traînée jusqu'à une position de verrouillage en traînée dans laquelle cette structure est en appui sur une butée de traînée solidaire du levier, ce levier provoquant simultanément le pivotement de la structure (manchon) de fixation de pale selon l'axe de pas jusqu'à une position de verrouillage en pas dans laquelle cette structure est en appui sur deux couples de butées de pas (44, 46) respectivement solidaires de deux leviers.

8. Rotor (10) de giravion comportant :
- un moyeu (15) ;
- plusieurs pales (11 à 14) repliables, chaque pale étant fixée au moyeu par une structure (16 à 19) de fixation ;
- un dispositif de verrouillage selon l'une quelconque des revendications 1 à 7.

## Claims

1. A locking device of a structure (16 to 19) for fixing a foldable blade (11 to 14) of a rotorcraft rotor (10) having foldable blades (11 to 14) on the hub (15) of the said rotor, this fixing structure having pitch hinging and drag hinging in relation to the hub (15), the device comprising a locking means for being respectively associated with each of the blade-fixing structures and for being arranged such that it can lock the pitch hinging of the blade-fixing structure (16 to 19) in relation to the hub (15), and which is moreover for being arranged such that it can lock the drag hinging of the blade-fixing structure in relation to the hub (15), the locking means being capable of being driven in motion by a rotary electrical actuator (30) and a driving mechanism, **characterised in that** it further comprises a means of braking the rotary electrical actuator or the driving mechanism which prevents rotation of this actuator and the driving mechanism under the effect in particular of vibrations of the rotor in the absence of electrical power, and which allows the actuator (30) and the driving mechanism to be rotated when the actuator (30) is powered, and **in that** the kinematics of the driving mechanism are irreversible.

2. A device according to Claim 1, in which the braking means acts by way of a magnetic effect.

3. A device according to Claim 2, in which the braking means comprises a first magnet (51) which is integral with a fixed part of the actuator or driving mechanism, and a second magnet (53) which is integral with a movable part of the actuator or driving mechanism, the position of the first magnet on the fixed part and the position of the second magnet on the movable part being such that the first magnet and the second magnet may be placed opposite one another when the actuator rotates, the polarities of these magnets being such that they attract one another when they are placed opposite one another such that a braking torque is produced when they are moved away from this mutually opposite position.

4. A device according to Claim 3, in which the braking means has at least two first magnets (51, 52) which are integral with a fixed part such as a fixing flange (38) of the actuator, and has at least two second magnets (53, 54) which are integral with a movable part such as a driving gear (37) of a locking lever (28) of a bushing articulated by means of the rotary actuator (30), with the movable part extending - at least in part - opposite the fixed part, with the spacing between the first magnets corresponding to the spacing between the second magnets such that the braking torques respectively brought about by each of the at least two pairs of magnets are added to one another.

5. A device according to any one of Claims 1 to 4, in which the mechanism for driving the locking means by the actuator includes a speed reducing means.

6. A device according to Claim 5, in which the speed reducing means is a reducing means having a gear and an endless screw (50, 36).

7. A device according to any one of Claims 1 to 6, in which the locking means includes a locking lever (28) which is arranged to pivot this structure about the axis of drag into a position in which the drag is locked, in which this structure bears against a drag stop which is integral with the lever, this lever at the same time pivoting the blade-fixing structure (bushing) about the axis of pitch into a position in which the pitch is locked, in which this structure bears against two pairs of pitch stops (44, 46) which are respectively integral with two levers.

8. A rotor (10) of a rotorcraft, having:
- a hub (15);
- a plurality of foldable blades (11 to 14), each blade being fixed to the hub by a fixing structure (16 to 19);
- a locking device according to any one of Claims 1 to 7.

## Patentansprüche

1. Verriegelungsvorrichtung einer Struktur (16 bis 19) zur Befestigung eines faltbaren Blatts (11 bis 14) eines Drehflügler-Rotors (10) mit faltbaren Blättern (11 bis 14) an der Nabe (15) des Rotors, wobei diese Befestigungsstruktur in Blattverstellung und Luftwiderstand bezüglich der Nabe (15) angelenkt ist, wobei die Vorrichtung ein Verriegelungsmittel aufweist, um jeder der Blattbefestigungsstrukturen zugeordnet zu werden, und um eingerichtet zu sein, um die Verriegelung des Blattverstellungsgelenks der Befestigungsstruktur (16 bis 19) des Blatts bezüglich der Nabe (15) bewirken zu können, und um außerdem eingerichtet zu sein, um die Verriegelung des Luftwiderstandsgelenks der Blattbefestigungsstruktur bezüglich der Nabe (15) bewirken zu können, wobei das Verriegelungsmittel von einem drehenden elektrischen Stellantrieb (30) und einem Antriebsmechanismus in Bewegung versetzt werden kann,
**dadurch gekennzeichnet, dass** es außerdem ein Bremsmittel des drehenden elektrischen Stellantriebs oder des Antriebsmechanismus aufweist, das die Drehung dieses Stellantriebs und des Antriebsmechanismus unter der Wirkung insbesondere der Vibrationen des Motors in Abwesenheit eines Speisestroms verhindert, und das die Drehung des Stellantriebs (30) und des Antriebsmechanismus erlaubt, wenn der Stellantrieb (30) gespeist wird,
und dass der Antriebsmechanismus eine unumkehrbare Kinematik aufweist.

2. Vorrichtung nach Anspruch 1, bei der das Bremsmittel durch Magnetwirkung arbeitet.

3. Vorrichtung nach Anspruch 2, bei der das Bremsmittel einen ersten Magnet (51), der fest mit einem ortsfesten Teil des Stellantriebs oder des Antriebsmechanismus verbunden ist, sowie einen zweiten Magnet (53) aufweist, der fest mit einem beweglichen Teil des Stellantriebs oder des Antriebsmechanismus verbunden ist, wobei die Position des ersten Magnets auf dem ortsfesten Teil und die Position des zweiten Magnets auf dem beweglichen Teil so sind, dass der erste Magnet und der zweite Magnet bei der Drehung des Stellantriebs einander gegenüber angeordnet sein können, und die Polaritäten dieser Magnete so sind, dass sie sich gegenseitig anziehen, wenn sie einander gegenüber angeordnet sind, um ein Bremsmoment zu bewirken, wenn sie aus dieser einander gegenüberliegenden Position entfernt werden.

4. Vorrichtung nach Anspruch 3, bei der das Bremsmittel mindestens zwei erste Magnete (51, 52), die fest mit einem ortsfesten Teil, wie einem Befestigungsflansch (38) des Stellantriebs, verbunden sind, und mindestens zwei zweite Magnete (53, 54) aufweist, die fest mit einem beweglichen Teil, wie einem Zahnradgetriebe (37) zum Antrieb eines Verriegelungshebels (28) einer angelenkten Muffe durch den drehbaren Stellantrieb (30) verbunden sind, wobei das bewegliche Teil sich - zumindest teilweise - gegenüber dem ortsfesten Teil befindet, wobei der Abstand der ersten Magnete dem Abstand der zweiten Magnete entspricht, so dass die Bremsmomente, die von jedem der mindestens zwei Magnetpaare bewirkt werden, sich addieren.

5. Vorrichtung nach einem der Ansprüche 1 bis 4, bei der der Antriebsmechanismus des Verriegelungsmittels durch den Stellantrieb ein Untersetzungsgetriebe aufweist.

6. Vorrichtung nach Anspruch 5, bei der das Untersetzungsgetriebe ein Getriebe mit Rad und Endlosschraube (50, 36) ist.

7. Vorrichtung nach einem der Ansprüche 1 bis 6, bei der das Verriegelungsmittel einen Verriegelungshebel (28) aufweist, der eingerichtet ist, um das Schwenken dieser Struktur gemäß der Luftwiderstandsachse bis in eine Luftwiderstand-Verriegelungsposition zu bewirken, in der diese Struktur auf einem fest mit dem Hebel verbundenen Luftwiderstandsanschlag aufliegt, wobei dieser Hebel gleichzeitig das Schwenken der Blattbefestigungsstruktur (Muffe) gemäß der Blattwinkelachse bis in eine Blattverstellungs-Verriegelungsposition bewirkt, in der diese Struktur auf zwei Paaren von Blattverstellungsanschlägen (44, 46) aufliegt, die je mit zwei Hebeln fest verbunden sind.

8. Rotor (10) eines Drehflüglers, der aufweist:
- eine Nabe (15);
- mehrere faltbare Blätter (11 bis 14), wobei jedes Blatt durch eine Befestigungsstruktur (16 bis 19) an der Nabe befestigt ist;
- eine Verriegelungsvorrichtung nach einem der Ansprüche 1 bis 7.
